# FASCICULE DE BREVET EUROPEEN

(11) **EP 0 509 912 B1**
(45) Date de publication et mention de la délivrance du brevet: **09.07.1997**
(21) Numéro de dépôt: 92401051.5
(22) Date de dépôt: 15.04.1992
(51) Int. Cl.: G01G 19/415

(54) **Dispositif pour la saisie, l'enregistrement, l'affichage et l'impression automatiques de données qualitatives et quantitatives d'un lot de denrées ou produits**
Vorrichtung zum Erfassen, Aufzeichnen, Anzeigen und automatischen Bedrucken von qualitativen und quantitativen Daten in einem Posten von Gütern oder Produkten
Apparatus for acquisition, recording, displaying and automatically printing of qualitative and quantitative data of a batch of goods or products

(30) Priorité: 15.04.1991 FR 9104592
(43) Date de publication de la demande: 21.10.1992
(73) Titulaire: Menillo, Jean-Jacques, F-75008 Paris (FR)
(72) Inventeur: Menillo, Jean-Jacques, F-75008 Paris (FR)
(74) Mandataire: Wagret, Frédéric

(56) Documents cités:
- EP-A- 0 020 920
- EP-A- 0 064 341
- EP-A- 0 089 190
- IBM Technical Disclosure Bulletin,Vol.28,N.2, July 1985,pp.498,499; "Parts-Input station system"

## Description

L'invention concerne un dispositif pour la saisie, l'enregistrement, l'affichage et l'impression automatiques ou semi-automatiques de données qualitatives et quantitatives, notamment du poids, caractéristiques d'un lot de denrées ou produits dans un processus d'élaboration ou de distribution.

Les documents EP 64 341, EP 20 920, EP 89 190 divulguent des systèmes et appareils de pesage délivrant automatiquement un document (fiche, étiquette, etc.) caractéristique de données d'un lot ou d'une quantité déterminée des produits soumis à pesage et ces données ayant été calculées à partir du poids capté par l'appareil et de la nature des produits affichés par l'opérateur.

Ces appareils nécessitent un affichage des caractéristiques du produit par pression sur un clavier ; les dimensions limitées du clavier et la nécessité de circonscrire le cadre des recherches à un nombre d'articles plafond est une contrainte qui restreint l'intérêt et le développement de ce type d'appareil et son emploi en milieu professionnel, notamment industriel.

Aussi, certains dispositifs tels que celui décrit dans le document IBM Technical Disclosure Bulletin Vol 28 N.2, July 1985 pp 498.499 prévoient en complément des moyens de lecture de code/barre. Or une mauvaise disposition de l'étiquette sur laquelle est imprimée le code/barre ou encore un problème au niveau de l'étiquette elle-même ou de son collage sur l'article peuvent empêcher la lecture du code/barre et bloquer ainsi le dispositif.

L'adaptation et le développement de systèmes de pesage, saisie, affichage et enregistrement, notamment de données caractéristiques d'un lot de produits dans un environnement industriel, notamment agro-alimentaire, doit répondre à un certain nombre de normes et d'exigences :
- Le pesage doit être réalisable par tout employé de l'entreprise, sans formation préalable.
- Le système doit être totalement étanche.
- Le système doit pouvoir émettre un ticket d'identification du pesage, mais doit pouvoir également émettre un ticket d'identification de lots, susceptible d'être lu en aval.
- Le système doit éventuellement permettre la lecture d'un code sur le colis qui lui est présenté pour pesage ou permettre la lecture d'un ticket introduit, l'affichage des paramètres à l'écran, la connexion avec une unité centrale et l'émission d'un ticket définitif convenablement paramétré.

Le système selon la présente invention prend en compte toutes ces contraintes et combine l'ensemble des moyens correspondants, permettant d'aboutir au résultat souhaité.

Le dispositif de l'invention a été particulièrement développé pour la marée parce que le problème s'y pose avec une acuité certaine, mais il est applicable à de très nombreux autres secteurs de la production ou de la distribution. On peut envisager, en effet, que des systèmes de ce type soient utilisés dans les fruits et légumes, dans les usines agro-alimentaires en général, dans le secteur de l'imprimerie, en particulier chez les doreurs qui, à tous les stades de la production, doivent peser leur papier.

D'une façon générale, l'invention réalise un terminal de pesage intelligent pouvant être utilisé dans tous les secteurs où une préparation de commande et/ou un suivi de fabrication par pesage est nécessaire et ceci lot par lot.

A cet effet, selon l'invention, le dispositif présente, de manière avantageuse, les caractéristiques des revendications 1 à 6 annexées.

D'autres caractéristiques et avantages de l'invention ressortiront de la description qui suit, qui est donnée à titre simplement indicatif et non limitatif et en référence avec les dessins annexés dans lesquels :

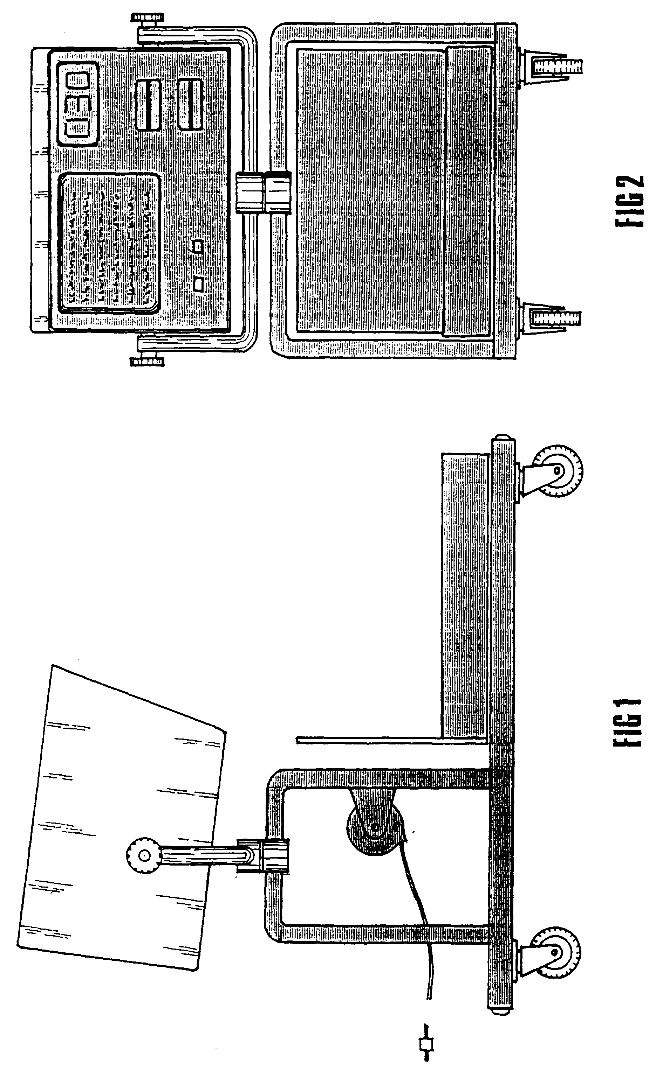

- la figure 1 est une vue en élévation latérale du dispositif de l'invention.

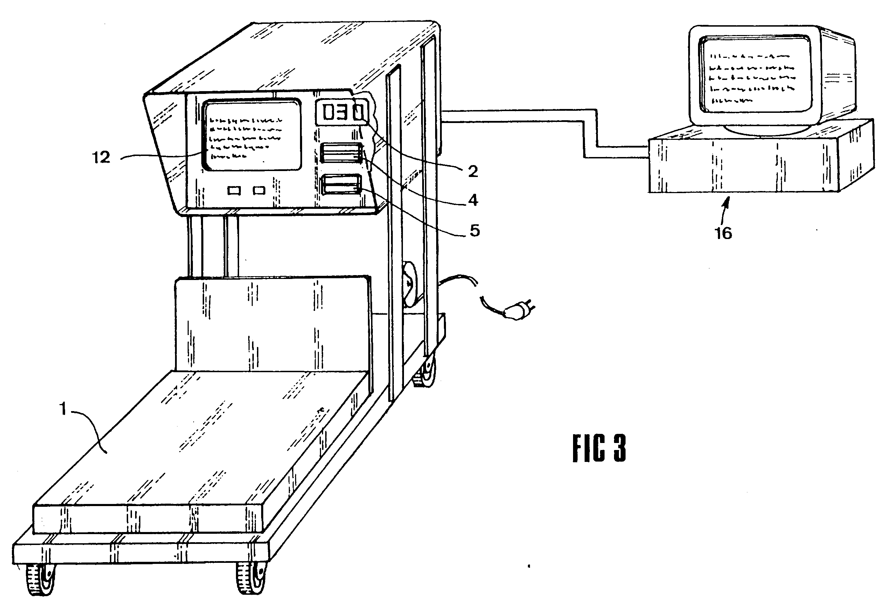

- la figure 2 est une vue en élévation frontale du même dispositif ;
- la figure 3 est une vue en perspective de ce même dispositif ;

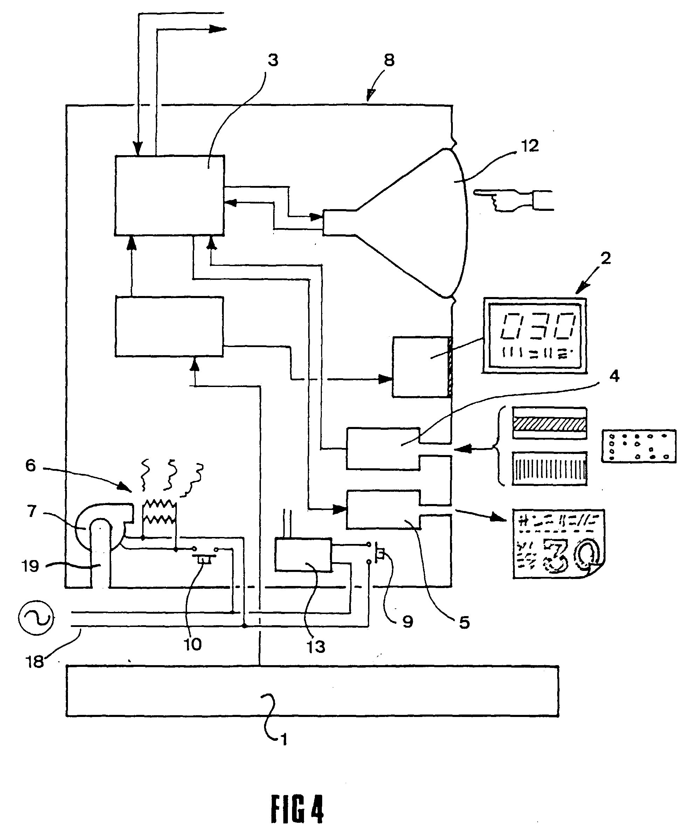

- la figure 4 est une vue schématique des principales fonctions mises en oeuvre dans le cadre de l'appareil objet de la présente invention ;
- la figure 5 est une vue schématique en perspective d'une installation industrielle utilisant le dispositif de l'invention sous forme de postes décentralisés et reliés à un ordinateur central.

En se référant aux dessins annexés, on voit que le terminal est constitué par :
- un plateau de pesage à capacité variable (1)
- un indicateur de poids (2) correspondant au plateau de pesage,
- un micro-ordinateur (3),
- un lecteur de cartes (4) adapté au type de tickets choisi,
- une imprimante (5) adaptée au ticket choisi pour l'édition définitive,
- un radiateur de chauffage (6) et un ventilateur (7) associé qui aspire de l'air ambiant du local d'exploitation, réchauffe et diffuse l'air sec dans l'ensemble du coffret et utilise la fente d'introduction des tickets pour rejeter en partie haute du système l'air chaud de ventilation.
- un coffret électronique (8) regroupant le micro-ordinateur (3), le lecteur (4), l'imprimante (5), l'indicateur de poids (2), un bouton "marche-arrêt" (9), pour la partie "électronique", un bouton "marche-arrêt" (10) pour la partie "ventilation",
- un écran tactile (12) de type connu en soi

L'opérateur du terminal de pesage ici décrit ne dispose pas d'un clavier associé à une balance, mais il n'y aurait aucun inconvénient à utiliser un clavier étanche, le principe général ne changerait pas.

Par contre, l'utilisation d'un clavier alourdit considérablement l'exploitation et nécessite un temps beaucoup plus long, car il faut en permanence que l'opérateur fasse le rapprochement entre les indications apparaissant à l'écran et la touche sur laquelle il doit appuyer.

C'est la raison pour laquelle l'invention a développé un système autour d'un écran tactile qui permet, dans un geste naturel, comme si on montrait du doigt la référence choisie, de donner des indications au terminal.

Comme exposé précédemment, le terminal de pesage, selon l'invention, est constitué par un plateau de balance dont la capacité de pesage peut varier de quelques grammes à plusieurs milliers de kilos, seul l'indicateur de poids légalement obligatoire, intégré dans le coffret électronique changera en fonction de la gamme de poids exploité.

Les capteurs de poids, par l'intermédiaire de l'indicateur, sont reliés à une entrée entrée appropriée d'un micro ordinateur classique de type PC ou de type Macintosh ou d'un terminal de mini ordinateur ou système informatique central de toute dimension.

Les deux connexions sont possibles et les entrées peuvent être faites au moyen d'une liaison RS232 classique ou par toute autre liaison informatique appropriée au système de pesage. Le micro-ordinateur, équipé d'un disque dur ou d'un système à disquettes classique, connecté en réseau ou fonctionnant en autonome, intégrera dans un fichier le poids fourni par le système de pesage.

L'utilisation d'un écran tactile comme organe de saisie permet, par la mise en oeuvre d'un programme informatique de gestion approprié, non pas de faire saisir un code "produit", notion abstraite pour un employé d'exécution d'usine, mais de rechercher, au moyen d'une arborescence convenable, le libellé complet du produit à peser.

Le point de départ d'affichage des informations sur l'écran est donc l'alphabet.

### Exemple :

Imaginons que nous voulions peser une boite contenant des soles.
- L'opérateur choisira, dans un premier temps, d'appuyer sur la lettre S.
- L'écran fera alors apparaître la totalité des produits commençant par la lettre S.
- L'opérateur choisira alors la sole parmi toutes les autres possibilités.
- On fera alors apparaître à l'écran tous les produits dérivés de la sole (calibre, qualité, présentation, etc...) et toutes les combinaisons de ces différents paramètres autour du produit recherché.
- On fera ensuite apparaître sur l'écran les notions liées au colis contenant le produit, selon un principe identique (taille de la boite, type de boîte, type de tare, etc...).
- L'écran indiquera la totalité des paramètres choisis et demandera une validation.
- Cette validation permettra de générer une ligne d'informations contenant tous les paramètres du produit et son poids net.

La seconde originalité fondamentale de ce système est de supprimer la totalité de la recherche décrite dans l'exemple ci-dessus, pour le cas où un ticket serait introduit dans le lecteur correspondant ou, pour le cas où le scanner ou système de lecture qui pourrait être placé sur la bascule reconnaîtrait un code prédéterminé sur l'emballage à peser.

Ce ticket peut être micro-perforé, muni d'un code à barres ou d'une piste magnétique. Le choix entre ces trois types de tickets dépendra essentiellement de la qualité de l'environnement du local dans lequel l'appareil est exploité.

On a exposé précédemment que dans le procédé général, le ticket introduit dans la balance servait également d'ordre de fabrication, on a donc prévu à l'entrée du lecteur de cartes, une raclette ou une brosse souple pour nettoyer éventuellement le ticket introduit.

L'introduction du ticket ou la lecture du code par le lecteur approprié supprime immédiatement la recherche de l'arborescence décrite dans l'exemple et permet d'afficher à l'écran le libellé complet du produit à peser.

Dans certains cas, seule la recherche de tare de l'emballage sera nécessaire.

Lorsqu'un code est reconnu, deux cas peuvent se présenter après pesage :
- Le ticket est utilisé comme étiquette finale ou doit poursuivre le process du produit à peser, dans ce cas, le ticket est ressorti après pesage et après inscription convenable sur ce ticket du poids enregistré.
- Le ticket n'est plus utile pour la suite du process, c'est une étiquette définitive finale qui est émise par une imprimante.

La différence entre ces deux types de balances donne lieu à la création d'une balance d'un premier type qui émet un ticket neuf, ou d'un second type qui rejette le ticket d'origine modifié. Ces deux moyens peuvent être réunis sur le même appareil.

Dans tous les cas, le concept reste identique, il ne s'agit que de différences dans les modalités d'application, donc dans l'équipement du terminal, donc dans son prix.

Comme on peut le voir ci-dessus, pour être particulièrement bien protégé contre les problèmes d'humidité que l'on rencontre systématiquement dans l'industrie agro-alimentaire, le coffret électronique est largement ventilé et chauffé.

De ce fait, deux réseaux électriques cohabitent dans le coffret électroniques :

Le premier réseau, non régulé, est destiné à alimenter le système de chauffage, ce qui permet d'avoir de l'air chaud et sec 24 heures sur 24, 365 jours par an, dans le coffret, si nécessaire, pour éviter la condensation et les pannes systématiques à la mise en route des usines après des arrêts plus ou moins prolongés.

Sur le bouton "marche-arrêt" de ce réseau non régulé, un disjoncteur différentiel est installé pour assurer la protection.

Le second réseau est destiné à alimenter la partie purement électronique, y compris le pesage.

Ce réseau est également commandé par un bouton "marche-arrêt" et protégé par un disjoncteur différentiel convenablement dimensionné.

Ce second réseau, selon le choix de l'exploitant, peut être connecté au même réseau que l'alimentation du chauffage ou peut être avantageusement connecté à un réseau séparé, régulé, filtré et relié à un onduleur (13) à réserve de marche, pour permettre une absence totale de risques de coupures de courant avant sauvegarde de la pesée en cours.

En tout état de cause, le programme de gestion sauvegarde systématiquement toutes les pesées réalisées, immédiatement après la validation, sauf dans le cas de la constitution automatique de lots correspondant au regroupement de plusieurs pesées, cette sauvegarde étant faite après la création du lot.

La température à l'intérieur du coffret électronique sera de l'ordre de 20°C; elle est maintenue constante par le radiateur de chauffage dont la puissance sera adaptée au type de local d'exploitation.

On peut envisager, dans les cas difficiles, d'introduire un thermostat d'ambiance qui piloterait le disjoncteur.

Les trous de ventilation qui permettront d'aspirer de l'air ambiant dans le coffret seront placés dans la partie la plus inférieure de ce coffret, pour éviter, dans tous les cas, les entrées d'eau, en cas de local où les lavages se font au jet.

Il demeure parfaitement possible, dans ces conditions, de recouvrir l'ensemble du coffret par une housse transparente, à conditions qu'elle ne recouvre que cinq côtés du coffret, à l'exception du côté où se fait l'aspiration de l'air de ventilation.

En ce qui concerne la lecture et l'impression des tickets ou étiquettes utilisés, deux solutions techniques peuvent être montées en série sur le terminal de pesée:
- un lecteur et une imprimante séparée, ce sera le cas lorsque des ordres de fabrication seront imprimés sur des tickets perforés ou à piste magnétique introduits dans le lecteur ou précollés sur l'emballage.
- un appareil unique permettant à la fois la lecture et la réimpression de l'étiquette, ce sera le cas adopté avec des tickets à piste magnétique particuliers ou à codes à barres.

Dans ce dernier cas, le système utilisé est tout à fait comparable à ce que l'on trouve dans les aéroports au niveau des cartes d'embarquement.

Le coffret électronique a une position variable par rapport au plateau de pesage.

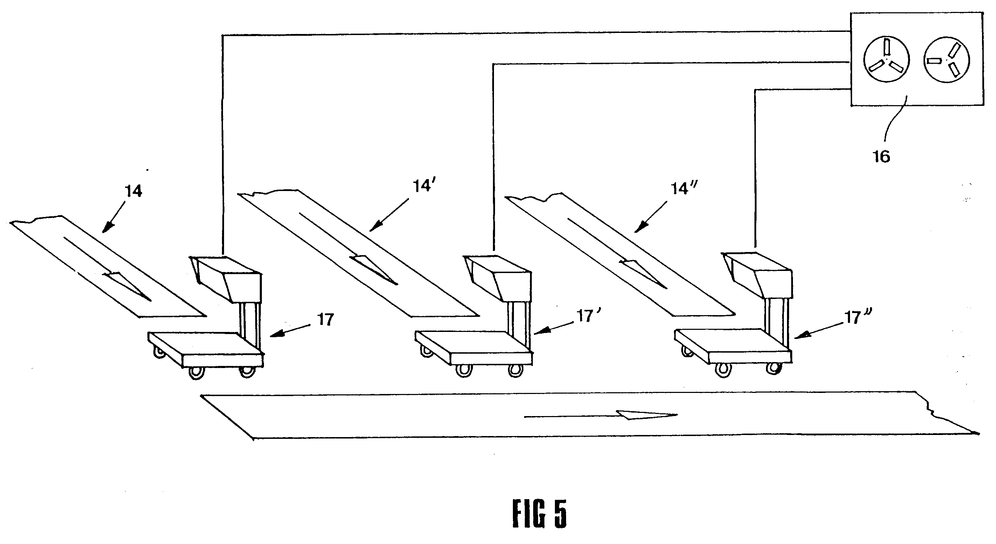

Dans un terminal de pesée placé en bout de chaîne de conditionnement 14, 14', 14", comme représenté sur la figure 5 par exemple, le plateau de pesée sera à hauteur convenable en fonction du type d'emballage à peser et le coffret électronique orientable selon deux ou quatre axes, sera placé à hauteur des yeux de l'opérateur, l'ensemble pouvant être intégré dans un châssis unique.

Dans le cas d'un pesage de palettes, par exemple, le plateau de pesée pourra être intégré dans le sol ou posé sur le sol, alors que le coffret électronique, toujours orientable selon deux ou quatre axes, pourra être placé au mur ou sur un support approprié, à côté de l'opérateur.

On peut ainsi envisager qu'un cariste vienne déposer une palette sur le plateau de pesée et se trouve à proximité immédiate du coffret pour réaliser lui-même les manipulations sur l'écran ou avec les tickets suiveurs ou émis.

De préférence dans l'implantation appliquant l'invention on trouve une pluralité de terminaux l5, 15', 15", chacun en bout d'une chaîne de préparation l4, 14', 14", l'ensemble des terminaux 15, 15', l5" étant reliés à un ordinateur central 16 intégrant les opérations de chacun des terminaux dont les données sont mises en mémoire, pour permettre le suivi des opérations et les bilans matière ainsi que les calculs de prix de revient.

D'autres développements tant au plan du dispositif que dans ses méthodes et procédés de mise en oeuvre spnt prévus dans le cadre de diverses formes de réalisation de l'invention et notamment:
- le microprocesseur comporte une horloge propre à saisir les données de temps afférentes à chaque opération enregistrée et à associer à l'enregistrement des données de chaque opération la donnée de temps correspondante, et l'unité centrale comporte également une horloge reliée à (a pointeuse de constatation de l'arrivée et de départ du personnel.

Des caractéristiques revendiquées concernent encore les procédés de mise en oeuvre du dispositif et comportent les opérations suivantes:
a) on saisie et on enregistre sur une mémoire centrale les données afférentes au lot programmé;
b) on édite pour chaque lot programmé un support d'informations contenant les caractéristiques du lot;
c) on associe ce support d'informations à un conteneur et un opérateur remplit le conteneur à partir de matière première prélevée au stock, subissant éventuellement les opérations intercalaires de préparation et d'élaboration voulues;
d) on présente le conteneur ainsi rempli à un terminal de pesée conforme à l'une des revendications 1 à 7 ci-dessous;
e) on soumet audit terminal ledit support d'informations associé audit conteneur à des moyens de lecture prévus audit terminal;
f) on vérifie la conformité des données qualitatives programmées et affichées sur un écran et correspondantes aux données enregistrées sur le support d'informations, par rapport aux caractéristiques des produits présents dans le conteneur;
g) on vérifie la conformité des données quantitatives tel que le poids programmé et lu depuis le support d'informations et apparaissant sur l'écran, par rapport aux données réelles affichées parallèlement sur l'écran et provenant de la saisie dudit poids par la balance;
h) on valide les données affichées lesquelles sont alors mémorisées, les données de poids saisies au niveau du terminal de pesée s'ajoutant aux données qualitatives déjà enregistrées précédemment;
i) on émet un nouveau support d'informations (éventuellement sur le même support matériel que le support d'informations précédent) le support d'informations nouvellement émis étant complété des données saisies validées et enregistrées audit terminal de pesée.
   Selon une variante les données enregistrées par une pluralité de terminaux sont centralisées dans une unité centrale ainsi apte à gérer la comptabilité matière d'une pluralité de lignes d'élaboration de lots programmés.
   Facultativement le procédé comporte en aval de la phase "i" ci-dessus également la phase suivante:
j) - on envoie les données validées et enregistrées à chaque terminal vers une unité centrale laquelle émet, à partir d'un programme approprié et sur la base desdites données ainsi reçues de l'ensemble des terminaux, et par des moyens d'édition appropriés, les documents de circulation (bons de livraison) ou comptables (facturation) afférents à chacun ou à un groupe de lots des produits élaborés..

En amont de la phase de processus d'élaboration et de préparation des produits ou lots de produits, la matière première avant mise au stock est comptabilisée à partir d'un terminal de pesée selon l'une des revendications 1 à 7 ci-après, les produits bruts étant ventilés par catégories correspondantes aux données telles espèces, tailles, qualités, présentation, et les données correspondantes sont saisies par l'opérateur par contact tactile notamment sur un écran cathodique, les données quantitatives tels que le poids et l'heure étant saisies par le terminal de pesée et l'ensemble de ces données est mis en mémoire dans une unité centrale.

Eventuellement après élaboration partielle d'un lot dans une première ligne de préparation, le conteneur correspondant à ce lot est envoyé pour être complété dans une seconde ligne, à la sortie de cette seconde ligne le lot est à nouveau soumis à un terminal de pesée selon l'une des revendications 1 à 7 ci-après, le support d'informations associé audit conteneur étant lu par le terminal et les opérations de pesée, vérification, saisie et validation étant conduites à ce terminal pour intégrer dans les données enregistrées les caractéristiques des produits ou des phases de transformation opérées dans cette seconde ligne, et les données ainsi constatées sont après validation enregistrées et adressées avec l'ensemble des données précédentes à la mémoire d'une unité centrale.

On saisit en outre à chaque validation des opérations correspondant à un lot dans son conteneur, un code identifiant l'opérateur ou le personnel ayant procédé à la phase de préparation contrôlée audit terminal.

Enfin on peut faire établir par l'unité centrale, à partir d'un programme approprié et de l'ensemble des données saisies et enregistrées à partir des terminaux de pesée, une comptabilité matière définissant le rendement matière et l'inventaire permanent des stocks ainsi que le fichier permanent des commandes en cours, et à partir des données de temps, une comptabilité temps de travail permettant de déterminer le rendement des opérateurs.

Les avantages du dispositif et du procédé tels que décrits ci-dessus ont déjà été décrits, on rappellera que:
- d'une part, l'utilisation du terminal supprime définitivement les opérations scripturales manuelles et les opérations de saisie des données chiffrées (poids, heure, code de l'opérateur), se font automatiquement,
- d'autre part, le terminal ne fait à aucun moment appel à la notion de codification et élimine une source d'erreur d'interprétation,
- enfin l'utilisation du terminal permet d'introduire une notion de contrôle continu de vraisemblance qui ne peut que très difficilement être mise en oeuvre dans les procédés actuellement connus.

Dans le cas de l'utilisation du terminal interactif, la saisie dans le bureau commercial reste la seule opération pouvant introduire des erreurs.

Comme on peut le voir dans le descriptif de la procédure qui précède, l'introduction du terminal interactif selon l'invention, permet de résoudre les trois problèmes fondamentaux qui se posent encore actuellement dans la quasi totalité des cas de préparation de commandes multiples:
- la procédure permet une saisie automatique des poids ainsi que, sur option, le comptage du nombre de pièces mises en préparation, ce qui permet à la fois de donner des poids précis et de déduire des stocks un nombre de pièces exact, puisqu'il devient impossible de ne pas fournir une commande complète;
- la procédure décrite précédemment supprime définitivement les erreurs de saisie;
- la procédure décrite précédemment supprime également les erreurs de calibrage dans les pièces préparées en vue de livraison.

La saisie des poids, le comptage du nombre des boîtes préparées pour chaque ligne de commande, se font automatiquement et permettent la mise à jour du fichier central des commandes du jour.

L'utilisation du terminal intégré à une ou plusieurs chaînes d'élaboration, supprime donc à la fois les déplacements incessants du personnel et toutes les sources d'erreurs liées à l'inscription manuelle des poids.

L'intégration du terminal permet au chef d'atelier de connaître à tout moment l'état de préparation de toutes les commandes du jour ou d'une commande particulière en cours.

La centralisation des données au moyen du terminal interactif permet l'édition automatique des bulletins de livraison et la transmission directe au service comptable des éléments de facturation.

Il devient évident qu'un terminal de pesée à la réception, comme décrit précédemment, couplé à un terminal intégré au processus d'élaboration permettent d'alimenter un programme de gestion de production donnant au jour le jour les résultats d'exploitation de l'atelier et l'état des stocks en fin de processus.

Le dispositif de l'invention implique encore des développements au niveau de la gestion du personnel.

En effet le procédé et le dispositif de l'invention permettent également d'identifier les opérateurs ayant préparé chaque boîte et donc de compter le temps passé pour chaque ligne de commande.

Parallèlement à l'organisation précise de la production et à la gestion des poids de matières premières des produits finis, en stock aux différents endroits de l'unité de production, il est alors possible de gérer le temps passé par le personnel d'exécution.

## Revendications

1. Dispositif pour la saisie, l'enregistrement, l'affichage et l'impression de données qualitatives et quantitatives caractéristiques d'un lot de denrées ou produits du type, comprenant
- des moyens de pesage (1) propres à émettre des signaux électroniques représentatifs du poids capté;
- des moyens d'affichage (2) visuel reliés auxdits moyens de pesage et aptes à transformer lesdits signaux électroniques en données visuelles tels que des chiffres affichés sur un écran ;
- des moyens propres à permettre la saisie de données sélectionnées par l'opérateur et correspondant aux caractéristiques qualitatives des denrées ou produits pesés ;
- des moyens informatiques de traitement et de mémorisation ; et
- des moyens d'édition d'un support d'information,
caractérisé en ce qu'il comprend un organe de lecture (4) de supports d'informations tels qu'une carte perforée, une carte magnétique ou une carte optique comportant un code/barre, ledit organe de lecture (4) étant apte à émettre en direction des moyens informatiques des signaux représentatifs des données qualitatives pré-enregistrées sur ledit support d'informations, lesquelles données après saisie par les moyens informatiques sont aptes à être affichées sur ledit écran et en ce que lesdits moyens d'édition sont aptes à recevoir l'information traitée par les moyens informatiques, à émettre un document tel qu'une étiquette portant les données qualitatives et quantitatives du produit et l'identification du lot concerné, ou à recevoir ledit support d'informations entré dans le dispositif au niveau de l'organe de lecture, lesdits moyens d'édition étant aptes à reporter et reproduire, par impression sur ledit support, les caractéristiques quantitatives et qualitatives du lot concerné et identifié par une référence pré-enregistrée sur ledit support, le support d'informations étant ainsi complété de données correspondant aux opérations de traitement effectuées au poste de travail équipé du dispositif, données enregistrées à la fois sur ledit support et mémorisées dans lesdits moyens informatiques.

2. Dispositif selon la revendication 1,
caractérisé en ce que les moyens informatiques sont constitués par un micro-processeur comportant un programme permettant l'affichage sur l'écran d'une succession de tableaux de paramètres évoluant du général au particulier et offrant, selon une configuration arborescente ascendante, un panorama de données qualitatives susceptibles d'être sélectionnées par l'opérateur, notamment par contact tactile sur l'écran, jusqu'à définition précise du type particulier correspondant aux produits ou denrées en cours de saisie.

3. Dispositif selon l'une des revendications 1 ou 2,
caractérisé en ce que les organes de lecture, d'édition, d'affichage, les moyens informatiques, l'écran cathodique, sont intégrés dans un boîtier étanche (8) relié par un fil d'alimentation (18) au secteur, une façade du boîtier comportant l'écran cathodique (12), l'indicateur d'affichage (2), l'entrée (4) et la sortie (5) des supports d'informations reçus et émis par le dispositif et le boîtier (8) comporte intérieurement des moyens de climatisation, notamment une source de calories telle qu'une résistance électrique (6), alimentée par secteur, associée à des moyens (7) de mise en circulation de l'air chauffé par passage sur la résistance, les moyens de climatisation étant prévus avec un fonctionnement thermostaté et sont reliés à cet effet à un dispositif de régulation thermostatique.

4. Dispositif selon la revendication 3,
caractérisé en ce que les moyens de mise en circulation de l'air sont reliés à l'extérieur par une canalisation (19) permettant l'accès de l'air ensuite pulsé après chauffage à travers l'espace intérieur du boîtier, la mise en communication de l'extérieur avec l'espace intérieur du boîtier comportant des moyens évitant la projection d'eau ou de liquide à l'intérieur du boîtier, notamment des chicanes ou filtres.

5. Dispositif selon l'une des revendications 1 à 4,
caractérisé en ce que le boîtier est prévu monté sur un axe pivotant permettant l'orientation en site et en azimut pour permettre l'exposition face au poste de travail de l'opérateur.

6. Dispositif selon l'une des revendications 1 à 5,
caractérisé en ce que les moyens informatiques comportent une horloge propre à saisir les données de temps afférentes à chaque opération enregistrée et à associer à l'enregistrement des données de chaque opération la donnée de temps correspondante, et l'unité centrale comporte également une horloge reliée à la pointeuse de constatation de l'arrivée et de départ du personnel.

7. Ensemble constitué d'une unité centrale (16) apte à recevoir, à gérer et à enregistrer les données reçues d'une pluralité de dispositifs selon l'une des revendications 1 à 6 dépendant d'une même unité de production ou de distribution.

8. Procédé de saisie et d'enregistrement de données dans le cours de traitement de produits subissant un processus d'élaboration depuis une matière première brute reprise au stock et en vue de la production de produits élaborés ou de lots de produits élaborés et paramétrés,
caractérisé par la succession des opérations suivantes :
a) on saisit et on enregistre sur une mémoire centrale les données afférentes au lot programmé ;
b) on édite pour chaque lot programmé un support d'informations contenant les caractéristiques du lot ;
c) on associe ce support d'informations à un conteneur et un opérateur remplit le conteneur à partir de matière première prélevée au stock, subissant éventuellement les opérations intercalaires de préparation et d'élaboration voulues ;
d) on présente le conteneur ainsi rempli à un terminal de pesée conforme à l'une des revendications 1 à 7 ci-dessus ;
e) on soumet audit terminal ledit support d'informations associé audit conteneur à des moyens de lecture prévus audit terminal ;
f) on vérifie la conformité des données qualitatives programmées et affichées sur un écran et correspondantes aux données enregistrées sur le support d'informations, par rapport aux caractéristiques des produits présents dans le conteneur ;
g) on vérifie la conformité des données quantitatives tel que le poids programmé et lu depuis le support d'informations et apparaissant sur l'écran, par rapport aux données réelles affichées parallèlement sur l'écran et provenant de la saisie dudit poids par la balance ;
h) on valide les données affichées lesquelles sont alors mémorisées, les données de poids saisies au niveau du terminal de pesée s'ajoutant aux données qualitatives déjà enregistrées précédemment ;
i) on émet un nouveau support d'informations éventuellement sur le même support matériel que le support d'informations précédent, le support d'informations émis étant complété des données saisies validées et enregistrées audit terminal de pesée.

9. Procédé selon la revendication 8,
caractérisé en ce que les données enregistrées par une pluralité de terminaux sont centralisées dans une unité centrale ainsi apte à gérer la comptabilité matière d'une pluralité de lignes d'élaboration de lots programmés.

10. Procédé selon l'une des revendications 8 ou 9,
caractérisé en ce qu'il comporte en aval de la phase "i" ci-dessus, la phase suivante :
j) on envoie les données validées et enregistrées à chaque terminal vers une unité centrale laquelle émet, à partir d'un programme approprié et sur la base desdites données ainsi reçues de l'ensemble des terminaux, et par des moyens d'édition appropriés, les documents de circulation (bons de livraison) ou comptables (facturation) afférents à chacun ou à un groupe de lots des produits élaborés.

11. Procédé selon l'une des revendications 10 ou 11,
caractérisé en ce qu'en amont de la phase de processus d'élaboration et de préparation des produits ou lots de produits, la matière première avant mise au stock est comptabilisée à partir d'un terminal de pesée selon l'une des revendications 1 à 7, les produits bruts étant ventilés par catégories correspondantes aux données telles qu'espèces, tailles, qualités, présentation, et les données correspondantes sont saisies par l'opérateur par contact tactile notamment sur un écran cathodique, les données quantitatives telles que le poids et l'heure étant saisies par le terminal de pesée et l'ensemble de ces données est mis en mémoire dans une unité centrale.

12. Procédé selon l'une des revendications 8, 9 et 10,
caractérisé en ce qu'après élaboration partielle d'un lot dans une première ligne de préparation, le conteneur correspondant à ce lot est envoyé pour être complété dans une seconde ligne, à la sortie de cette seconde ligne le lot est à nouveau soumis à un terminal de pesée selon l'une des revendications 1 à 7, le support d'informations associé audit conteneur étant lu par le terminal et les opérations de pesée, vérification, saisie et validation étant conduites à ce terminal pour intégrer dans les données enregistrées les caractéristiques des produits ou des phases de transformation opérées dans cette seconde ligne, et les données ainsi constatées sont après validation enregistrées et adressées avec l'ensemble des données précédentes à la mémoire d'une unité centrale.

13. Procédé selon l'une des revendications 10 à 12,
caractérisé en ce que à l'occasion de chaque validation des opérations correspondant à un lot dans son conteneur, on saisit également un code identifiant l'opérateur ou le personnel ayant procédé à la phase de préparation contrôlée audit terminal.

14. Procédé selon l'une des revendications 10 à 15,
caractérisé en ce qu'on fait établir par l'unité centrale, à partir d'un programme approprié et de l'ensemble des données saisies et enregistrées à partir des terminaux de pesée, une comptabilité matière définissant le rendement matière et l'inventaire permanent des stocks ainsi que le fichier permanent des commandes en cours, et à partir des données de temps, une comptabilité temps de travail permettant de déterminer le rendement des opérateurs.

15. Variante de réalisation d'un procédé selon la revendication 12,
caractérisée en ce qu'en fin de préparation du lot de produits, la validation des données constatées au terminal, par rapport aux données programmées et affichées sur l'écran ayant été constatées, une validation finale est donnée par l'opérateur correspondant à la constatation de la conformité totale du lot par rapport à la commande paramétrée, le terminal, couplé à une imprimante décentralisée, édite un document de circulation, notamment un bon de livraison chiffré qui est immédiatement joint au conteneur.

## Patentansprüche

1. Vorrichtung zum Erfassen, Aufzeichnen, Anzeigen und automatischen Drucken von qualitativen und quantitativen Daten in einem Posten von Gütern oder Produkten mit
- einer Wiegeeinrichtung (1) zum Ausgeben dem erfaßten Gewicht entsprechender elektronischer Signale,
- einer mit der Wiegeeinrichtung verbundenen Sichtanzeigeeinrichtung (2) zum Umwandeln der elektronischen Signale in sichtbare Daten, zum Beispiel in auf einem Bildschirm angezeigte Zahlen,
- Mitteln zum Erfassen von durch den Bediener ausgewählten, qualitativen Merkmalen der gewogenen Güter oder Produkte entsprechenden Daten,
- Datenverarbeitungsmitteln zum Verarbeiten und Speichern und
- Mitteln zum Ausgeben eines Informationsträgers,
dadurch gekennzeichnet, daß die Vorrichtung ein Leseorgan (4) für Informationsträger, zum Beispiel Lochkarten, Magnetkarten oder einen Balkencode aufweisende Sichtkarten umfaßt, welches der Datenverarbeitungseinrichtung Signale zuführen kann, die den zuvor auf den Informationsträgern aufgezeichneten qualitativen Daten entsprechen, wobei die Daten nach dem Erfassen durch die Datenverarbeitungseinrichtung auf dem Bildschirm angezeigt werden können, und daß die Ausgabeeinrichtung in der Lage ist, von der Datenverarbeitungseinrichtung verarbeitete Informationen zu empfangen und ein Dokument, zum Beispiel ein Etikett, auszugeben, das die qualitativen und quantitativen Daten des Produkts sowie die Kennzeichnung des betreffenden Postens enthält, oder den im Bereich des Leseorgans eingegebenen Informationsträger aufzunehmen und die quantitativen und qualitativen Daten des betreffenden, zuvor durch eine entsprechende Kennung auf dem Informationsträger bezeichneten Postens dem Informationsträger zuzuordnen und auf diesem abzudrucken und auf diese Weise den Informationsträger mit den Daten zu vervollständigen, die den an der betreffenden, mit der Vorrichtung ausgestatteten Arbeitsstation ausgeführten Bearbeitungsvorgängen entsprechen, wobei die Daten gleichzeitig auf den Informationsträger aufgebracht und in der Datenverarbeitungseinrichtung gespeichert werden.

2. Vorrichtung nach Anspruch 1, dadurch gekennzeichnet, daß die Datenverarbeitungseinrichtung aus einem Mikroprozessor mit einem Programm besteht und in der Lage ist, auf dem Bildschirm eine Folge von Parametertabellen anzuzeigen, die sich von allgemeinen zu besonderen Angaben hin entwickeln und in einer ansteigend baumartigen Struktur qualitative Daten anbieten, die vom Bediener insbesondere durch Berühren des Bildschirms auswählbar sind, bis der den zu erfassenden Produkten oder Waren entsprechende genaue Typ präzise definiert ist.

3. Vorrichtung nach Anspruch 1 oder 2, dadurch gekennzeichnet, daß die Lese-, Ausgabe-, Anzeige-, Datenverarbeitungseinrichtungen und der Bildschirm in einem dichten Gehäuse (8) untergebracht sind, das über eine Versorgungsleitung (18) mit dem Netz verbunden ist, wobei eine Frontseite des Gehäuses den Bildschirm (12), die Anzeige (2), die Eingabe (4) und die Ausgabe (5) der Informationsträger in die bzw. aus der Vorrichtung umfaßt und das Gehäuse (8) im Inneren eine Klimatisiereinrichtung, insbesondere eine Wärmequelle, zum Beispiel einen durch das Netz gespeisten elektrischen Widerstand (6) umfaßt, dem Mittel (7) zum Umwälzen der durch Kontakt mit dem Widerstand erwärmten Luft zugeordnet sind, wobei die Klimatisiereinrichtung thermostatisch geregelt arbeitet und hierzu mit einer thermostatischen Steuerung verbunden ist.

4. Vorrichtung nach Anspruch 3, dadurch gekennzeichnet, daß die Luftumwälzeinrichtung mit dem Außenbereich über eine Leitung (19) verbunden ist, durch die Luft eintreten kann, die nach dem Erwärmen stoßweise durch das Innere des Gehäuses geführt wird, wobei die Verbindung zwischen dem Außenbereich und dem Innenraum des Gehäuses mit Mitteln, insbesondere Leitblechen oder Filtern, versehen ist, die ein Eindringen von Wasser oder Flüssigkeit in das Gehäuseinnere verhindern.

5. Vorrichtung nach einem der Ansprüche 1 bis 4, dadurch gekennzeichnet, daß das Gehäuse auf einer Achse schwenkbar angeordnet ist, so daß es absolut und in seiner örtlichen Position so ausgerichtet werden kann, daß die Anzeige zur Arbeitsstation des Bedieners hin weist.

6. Vorrichtung nach einem der Ansprüche 1 bis 5, dadurch gekennzeichnet, daß die Datenverarbeitungseinrichtung eine Uhr umfaßt, mittels derer für jeden aufgezeichneten Arbeitsvorgang Zeitdaten erfaßt und jeder Aufzeichnung der Daten eines Arbeitsvorgangs die entsprechenden Zeitdaten zugeordnet werden können, und daß auch die Zentraleinheit eine Uhr umfaßt, die mit einer Stechuhr zum Feststellen der Ankunft des Personals am Arbeitsplatz und seines Verlassens des Arbeitsplatzes verbunden ist.

7. Zentraleinheit (16) zum Empfangen, Verwalten und Aufzeichnen von Daten, die ihr von einer Vielzahl von derselben Produktions- oder Verteileinheit zugeordneten Vorrichtungen gemäß einem der Ansprüche 1 bis 6 zugeführt werden.

8. Verfahren zum Erfassen und Aufzeichnen von Daten während der Bearbeitung von Produkten, die ausgehend von einem dem Lager entnommenen Ausgangsmaterial im Hinblick auf die Herstellung von Fertigprodukten oder Posten von Fertigprodukten mit bestimmten Parametern einen Bearbeitungsprozeß erfahren,
gekennzeichnet durch die Abfolge der folgenden Arbeitsschritte:
a) In einem zentralen Speicher werden die dem programmierten Posten entsprechenden Daten erfaßt und aufgezeichnet;
b) für jeden programmierten Posten wird ein die Merkmale des Postens enthaltender Informationsträger ausgegeben;
c) dieser Informationsträger wird einem Behälter zugeordnet, und ein Bediener füllt den Behälter mit dem Lager entnommenem Ausgangsmaterial, das eventuell noch bestimmten Zwischen- oder Vorbereitungsarbeitsgängen unterzogen wird;
d) der so gefüllte Behälter wird einer Wiegestation nach einem der vorstehenden Ansprüche 1 bis 7 zugeleitet;
e) an dieser Wiegestation wird der dem Behälter zugeordnete Informationsträger mit an der Station vorgesehenen Leseeinrichtungen in Wirkverbindung gebracht;
f) man überprüft die Übereinstimmung der programmierten und auf einem Bildschirm angezeigten Daten, die den auf dem Informationsträger aufgezeichneten Daten entsprechen, mit den Merkmalen der im Behälter enthaltenen Produkte;
g) man überprüft die Übereinstimmung der qualitativen Daten, wie des programmierten und vom Informationsträger ausgelesenen und auf dem Bildschirm erscheinenden Gewichts, mit den Istdaten, die aufgrund des von der Waage erfaßten Gewichts parallel dazu auf dem Bildschirm angezeigt werden;
h) die angezeigten Daten werden bestätigt und damit gespeichert, wobei die an der Wiegestation erfaßten Gewichtsdaten den zuvor aufgezeichneten qualitativen Daten hinzugefügt werden;
i) es wird ein neuer Informationsträger ausgegeben, eventuell auf demselben Trägermaterial wie der vorherige Informationsträger, wobei der so ausgegebene Informationsträger durch die an der Wiegestation erfaßten, bestätigten und aufgezeichneten Daten vervollständigt wurde.

9. Verfahren nach Anspruch 8, dadurch gekennzeichnet, daß die von einer Vielzahl von Stationen aufgezeichneten Daten in einer Zentraleinheit zusammengeführt werden, die auf diese Weise die Materialverwaltung für eine Vielzahl von Bearbeitungsstrecken für programmierte Posten übernehmen kann.

10. Verfahren nach Anspruch 8 oder 9, dadurch gekennzeichnet, daß dem vorstehend beschriebenen Schritt "i" der folgende Schritt nachgeschaltet ist:
i) die an den einzelnen Stationen bestätigten und aufgezeichneten Daten werden einer Zentraleinheit zugeleitet, die aufgrund eines entsprechenden Programms auf der Grundlage der von allen Stationen erhaltenen Daten mittels entsprechender Ausgabeeinrichtungen Begleitpapiere (Lieferscheine) oder Buchungsunterlagen (Rechnungstellung) für die einzelnen Posten oder für Gruppen von Posten der bearbeiteten Produkte ausgibt.

11. Verfahren nach Anspruch 10 oder 11, dadurch gekennzeichnet, daß vor der Phase der Bearbeitung und der Vorbereitung der Produkte oder Produktposten das Ausgangsmaterial, bevor es auf Lager genommen wird, mit Hilfe einer Wiegestation nach einem der Ansprüche 1 bis 7 verbucht wird, wobei die Rohprodukte nach Kategorien entsprechend bestimmten Daten, wie Gattung, Größe, Qualität, Aussehen, unterteilt werden, und daß die entsprechenden Daten vom Bediener zum Beispiel durch Berühren eines Bildschirms eingegeben werden, wobei die quantitativen Daten, wie das Gewicht und die Uhrzeit, von der Wiegestation erfaßt werden, und daß die gesamten Daten dann in einer Zentraleinheit gespeichert werden.

12. Verfahren nach einem der Ansprüche 8, 9 und 10, dadurch gekennzeichnet, daß nach teilweiser Bearbeitung eines Postens in einer ersten Vorbereitungsstrecke der diesem Posten entsprechende Behälter zum Fertigbearbeiten einer zweiten Strecke zugeführt wird, daß der Posten am Ausgang der zweiten Strecke erneut zu einer Wiegestation nach einem der Ansprüche 1 bis 7 gelangt, wobei der dem Behälter zugeordnete Informationsträger von der Station gelesen wird und die Wiege-, Überprüfungs-, Erfassungs- und Bestätigungsschritte an dieser Station erneut durchgeführt werden, um die Merkmale der in dieser zweiten Strecke bearbeiteten Produkte oder Bearbeitungsvorgänge in die bereits aufgezeichneten Daten zu integrieren, und daß die so festgestellten Daten nach ihrer Bestätigung aufgezeichnet und zusammen mit den gesamten vorherigen Daten einem Speicher der Zentraleinheit zugeführt werden.

13. Verfahren nach einem der Ansprüche 10 bis 12, dadurch gekennzeichnet, daß bei jeder Bestätigung der an einem Posten in seinem Behälter ausgeführten Arbeitsgänge gleichzeitig ein Code erfaßt wird, durch den der Bediener oder die Person identifiziert wird, die den an dieser Station vorgenommenen Arbeitsgang ausgeführt hat.

14. Verfahren nach einem der Ansprüche 10 bis 15, dadurch gekennzeichnet, daß man die Zentraleinheit auf der Grundlage eines entsprechenden Programms und der gesamten an den Wiegestationen erfaßten und aufgezeichneten Daten eine Materialbuchhaltung erstellen läßt, aus der die Materialausgabe und die permanente Inventur sowie ein laufendes Verzeichnis der in Bearbeitung befindlichen Aufträge hervorgehen, und daß man auf der Grundlage der Zeitdaten eine Arbeitszeitabrechnung erstellen läßt, anhand derer die Leistung der Bedienungspersonen festgestellt werden kann.

15. Ausführungsvariante des Verfahrens nach Anspruch 12, dadurch gekennzeichnet, daß nach Abschluß der Bearbeitung des Produktpostens und nach erfolgter Bestätigung der an der Station festgestellten Daten im Vergleich zu den programmierten und auf dem Bildschirm angezeigten Daten der Bediener eine abschließende Bestätigung vornimmt, mit der die Gesamtübereinstimmung des Postens mit den Parametern der Bestellung bestätigt wird, und daß die mit einem dezentralen Drucker gekoppelte Station ein Begleitpapier, indsbesondere einen numerierten Lieferschein, ausgibt, der dem Behälter direkt beigelegt wird.

## Claims

1. Device for acquisition, recording, display and printing of characteristic qualitative and quantitative data of a batch of goods or products, comprising
- weighing means (1) adapted to emit electronic signals representative of the weight collected;
- visual display means (2) connected to said weighing means and adapted to transform said electronic signals into visual data such as figures displayed on a screen;
- means adapted to allow acquisition of data selected by the operator and corresponding to the qualitative characteristics of the goods or products weighed;
- data-processing means for processing and memorization; and
- means for editing an information support,
characterized in that it comprises a member (4) for reading information supports such as a perforated card, a magnetic card or an optical card comprising a bar code, said reading member (4) being adapted to emit in the direction of the data-processing means, signals representative of the qualitative data prerecorded on said information support, which data, after acquisition by the data-processing means, are adapted to be displayed on said screen and in that said editing means are adapted to receive the information processed by the data-processing means, to issue a document such as a label bearing the qualitative and quantitative data of the product and the identification of the batch in question, or to receive said information support entered in the device at the level of the reading member, said editing means being adapted to transfer and reproduce, by printing on said support, the quantitative and qualitative characteristics of the batch in question and identified by a reference prerecorded on said support, the information support thus being completed with data corresponding to the processing operations effected at the work station equipped with the device, data recorded both on said support and memorized in said data-processing means.

2. Device according to Claim 1,
characterized in that the data-processing means are constituted by a micro-processor comprising a program allowing display on the screen of a succession of tables of parameters evolving from the general to the particular and offering, in an ascending arborescent configuration, a panorama of qualitative data capable of being selected by the operator, particularly by touch contact on the screen, up to precise definition of the particular type corresponding to the products or goods in the course of acquisition.

3. Device according to one of Claims 1 or 2,
characterized in that the reading, editing, display members, the data-processing means, the cathode screen, are integrated in a tight box (8) connected by a supply wire (18) to the mains, one facade of the box comprising the cathode screen (12), the display indicator (2), the input (4) and output (5) of the information supports received and emitted by the device and the box (8) internally comprises air-conditioning means, particularly a source of calories such as an electrical resistor (6), supplied by the mains, associated with means (7) for circulating the air heated by passage over the resistor, the air-conditioning means being provided to be thermostated and to that end are connected to a thermostatic regulation device.

4. Device according to Claim 3,
characterized in that the air-circulating means are connected to the outside via a pipe (19) allowing access of the air then pulsed after heating through the interior of the box, the communication of the outside with the interior of the box comprising means avoiding the projection of water or liquid inside the box, particularly baffles or filters.

5. Device according to one of Claims 1 to 4,
characterized in that the box is provided to be mounted on a pivoting shaft allowing orientation in elevation and in azimuth to allow display opposite the work station of the operator.

6. Device according to one of Claims 1 to 5,
characterized in that the data-processing means comprise a clock adapted to collect the time data concerning each operation recorded and to associate with the recording of the data of each operation, the corresponding time datum, and the central unit also comprises a clock connected to the time clock marking the arrival and departure of the staff.

7. Assembly constituted by a central unit (16) adapted to receive, manage and record the data received from a plurality of devices according to one of Claims 1 to 6 depending on the same unit of production or distribution.

8. Process for acquiring and recording data in the course of processing products undergoing a process of elaboration from a raw material taken from stock and with a view to producing elaborated products or batches of elaborated and parametered products,
characterized by the succession of the following operations:
a) the data concerning the programmed batch are acquired and recorded on a central memory;
b) for each programmed batch, an information support containing the characteristics of the batch is edited;
c) this information support is associated with a container and an operator fills the container from raw material taken from stock, possibly undergoing the desired intermediate operations of preparation and elaboration;
d) the container thus filled is presented to a weighing terminal in accordance with one of Claims 1 to 7 hereinabove;
e) at said terminal, said information support associated with said container is subjected to reading means provided at said terminal;
f) the conformity of the qualitative data programmed and displayed on a screen and corresponding to the data recorded on the information support is checked with respect to the characteristics of the products present in the container;
g) the conformity of the quantitative data such as the weight programmed and read from the information support and appearing on the screen is checked with respect to the real data displayed parallel on the screen and coming from the acquisition of said weight by the scales;
h) the displayed data which are then memorized are validated, the weight data acquired at the level of the weighing terminal being added to the qualitative data already recorded previously;
i) a new information support, possibly on the same material support as the preceding information support, is issued, the information support issued being completed by the acquired data validated and recorded at said weighing terminal.

9. Process according to Claim 8,
characterized in that the data recorded by a plurality of terminals are centralized in a central unit thus adapted to manage the material accounts of a plurality of lines for elaborating programmed batches.

10. Process according to one of Claims 8 or 9,
characterized in that it comprises downstream of phase "i" hereinabove, the following phase:
j) the data validated and recorded at each terminal are sent towards a central unit which issues, from an appropriate program and on the basis of said data thus received from all the terminals, and by appropriate editing means, the dispatch documents (delivery notes) or accounting documents (invoices) concerning each or a group of batches of the elaborated products.

11. Process according to one of Claims 10 or 11,
characterized in that, upstream of the phase of process of elaboration and preparation of the products or batches of products, the raw material before storage is accounted for from a weighing terminal according to one of Claims 1 to 7, the raw products being divided into categories corresponding to the data such as types, sizes, qualities, presentation, and the corresponding data are collected by the operator by touch contact particularly on a cathode screen, the quantitative data such as weight and time being collected by the weighing terminal and all these data are memorized in a central unit.

12. Process according to one of Claims 8, 9 and 10,
characterized in that after partial elaboration of a batch in a first line of preparation, the container corresponding to this batch is sent to be completed in a second line, at the exit of this second line the batch is again submitted to a weighing terminal according to one of Claims 1 to 7, the information support associated with said container being read by the terminal and the weighing, checking, acquisition and validation operations being carried out at this terminal to integrate in the recorded data the characteristics of the products or the phases of transformation effected in this second line, and the data thus ascertained are after validation recorded and addressed with all the preceding data to the memory of a central unit.

13. Process according to one of Claims 10 to 12,
characterized in that upon each validation of the operations corresponding to a batch in its container, a code identifying the operator or the staff having proceeded with the phase of preparation monitored at said terminal, is also collected.

14. Process according to one of Claims 10 to 15,
characterized in that the central unit is made to establish, from an appropriate program and from all the data collected and recorded from the weighing terminals, material accounts defining the material output and the permanent inventory of the stocks as well as the permanent file of the pending orders, and from the time data, work time accounts allowing the output of the operators to be determined.

15. Variant of a process according to Claim 12,
characterized in that, at the end of preparation of the batch of products, the validation of the data ascertained at the terminal, with respect to the data programmed and displayed on the screen having been ascertained, a final validation is given by the operator corresponding to the ascertainment of the total conformity of the batch with respect to the parametered order, the terminal, coupled with a decentralized printer, issues a dispatch document, particularly a numbered delivery note which is immediately attached to the container.
